# EUROPÄISCHE PATENTSCHRIFT

(11) **EP 3 959 781 B1**
(45) Veröffentlichungstag und Bekanntmachung des Hinweises auf die Patenterteilung: **11.02.2026**
(21) Anmeldenummer: 20723274.5
(22) Anmeldetag: 15.04.2020
(51) Int. Cl.: H01R 9/053, H01R 13/52, H01R 13/6583, H01R 4/48

(54) **STECKVERBINDER UND STECKVERBINDERANORNUNG**
PLUG CONNECTOR AND PLUG CONNECTOR ASSEMBLY
CONNECTEUR ENFICHABLE ET ENSEMBLE DE CONNECTEUR ENFICHABLE

(30) Priorität: 24.04.2019 CN 201910336106
(43) Veröffentlichungstag der Anmeldung: 02.03.2022
(73) Patentinhaber: HARTING Electric Stiftung & Co. KG, 32339 Espelkamp (DE)
(72) Erfinder: HELLIGE, Denny, 32339 Espelkamp (DE); HORSTMANN, Jens, Zhuhai City Guangdong, 519085 (CN); DING, Brandon, Zhuhai City Guangdong, 519085 (CN)
(74) Vertreter: Eisenführ Speiser
(86) Internationale Anmeldenummer: PCT/DE2020/100302
(87) Internationale Veröffentlichungsnummer: WO 2020/216409

(56) Entgegenhaltungen:
- EP-A1- 3 410 543
- WO-A1-97/34340
- DE-A1- 19 955 666
- GB-A- 1 206 362
- GB-A- 2 504 347
- US-A- 3 744 007
- US-A- 5 823 803
- US-A1- 2004 248 466
- US-A1- 2009 215 306
- US-A1- 2011 250 789

## Beschreibung

### TECHNISCHES GEBIET

Die vorliegende Erfindung betrifft einen Steckerverbinder zum Verbinden mit einem Gegenstecker in Schnellanschlusstechnik, insbesondere zur Übertragung hoher Ströme und mit guten EMV-Eigenschaften. Die vorliegende Erfindung betrifft weiterhin eine Steckverbinderanordnung mit einem solchen Steckverbinder und einem solchen Gegenstecker.

### STAND DER TECHNIK

Mit der Entwicklung von Wissenschaft und Technik ist das Streben nach grüner Energie durch die Regierungen immer stärker geworden. Daher wird elektrische Energie in vielen Bereichen, beispielsweise in der Automobilindustrie, insbesondere im Schienenverkehr und im Straßenverkehr, immer häufiger eingesetzt. In diesem Fall bestehen besondere Leistungsanforderungen hinsichtlich der Stromübertragung. Beispielsweise erfordert das Aufladen dieser Verkehrsmittel eine Energieübertragung mit höheren Spannungen und/oder höheren Strömen. Daher besteht ein besonderer Bedarf an Steckverbindern, die hohe Ströme übertragen.

Im Stand der Technik wurden die Übertragungskabel zur Übertragung von hohen Spannungen und hohen Strömen schon verbessert. Beispielsweise wird eine EMV-Schicht, nämlich eine elektromagnetische Abschirmschicht in der äußeren Isolierschicht des Übertragungskabels vorgesehen, um zu vermeiden, dass ein durch die übertragenen hohen Spannungen oder Ströme verursachtes Magnetfeld den normalen Betrieb von in der Nähe befindlichen elektronischen Geräten stört. Allerdings bietet ein Teil der bestehenden Steckverbinder eine Abschirmfunktion gegen elektromagnetischen Störung nur im inneren des Strom- oder Signal-übertragenden Steckverbinders, insbesondere für die Kontakte, was für die Übertragung höherer Spannungen und Ströme nicht ausreicht.

### INHALT DER VORLIEGENDEN ERFINDUNG

Dementsprechend zielt die vorliegende Erfindung darauf ab, einen Steckverbinder zur Verfügung zu stellen, der eine zusätzliche elektromagnetische Abschirmungsfunktion bereitstellt und das geschilderte Problem löst, hohe Spannungen und/oder hohe Ströme zu übertragen.

Gemäß einem Aspekt der vorliegenden Erfindung wird ein Steckverbinder zum elektrischen Verbinden eines daran anschließbaren Kabels mit einem Gegenstecker zur Verfügung gestellt, umfassend: mindestens einen leitfähigen Kontakt; ein isolierendes inneres Gehäuse, welches einen Befestigungsabschnitt zum Befestigen der Kontakte aufweist; ein leitfähiges äußeres Gehäuse, welches einen Befestigungsabschnitt zum Befestigen des inneren Gehäuses aufweist. Der Steckverbinder umfasst weiterhin ein mit dem leitfähigen äußeren Gehäuse elektrisch verbundenes erstes Abschirmelement, das eine isolierende äußere Schicht des mit dem Steckverbinder verbundenen Kabels kontaktieren kann und somit einen elektrischen Kontakt mit der elektromagnetischen Abschirmschicht in der isolierenden äußeren Schicht des Kabels herstellen kann, um eine weitere elektromagnetische Abschirmfunktion für das Kabel bereitzustellen, wobei das erste Abschirmelement als ringförmige Feder in Form eines umgekehrten Dreiecks ausgebildet ist, dessen eine Seite in leitfähigem Kontakt mit dem leitfähigen äußeren Gehäuse (14) steht, während die untere Spitze in elektrischem Kontakt mit der elektromagnetischen Abschirmschicht des Kabels (4) bringbar ist. Dabei weist der Steckverbinder ein in dem leitfähigen äußeren Gehäuse aufgenommenes zweites Abschirmelement auf, das in elektrischem Kontakt mit dem leitfähigen äußeren Gehäuse des Steckverbinders und dem leitfähigen. äußeren Gehäuse eines mit dem Steckverbinder verbundenen Gegensteckers stehen kann, um eine weitere elektromagnetische Abschirmfunktion für das Kabel bereitzustellen.

Gemäß der vorliegenden Erfindung stellt das erste Abschirmelement jeweils eine elektrische Verbindung mit dem leitfähigen äußeren Gehäuse und der elektromagnetischen Abschirmschicht des anschließbaren Kabels her. Daher kann im Inneren des Kabels und des Steckverbinders eine zusätzliche elektromagnetische Abschirmfunktion bereitgestellt werden, womit bei der Übertragung höherer Spannungen oder Ströme die Anforderungen für externe elektronische Geräte an elektromagnetische Interferenzen erfüllt werden können.

In einem anderen bevorzugten Ausführungsbeispiel der vorliegenden Erfindung ist das erste Abschirmelement aus Metall hergestellt, wobei das Metall ein rostfreies Metall ist. Bevorzugt handelt es sich bei dem Metall um eine Aluminiumlegierung, deren Oberfläche stromlos vernickelt ist.

Alternativ oder ergänzend kann das erste Abschirmelement aus Kupfer, Stahl, Aluminium und/oder Messing bestehen oder diese Materialien zumindest aufweisen.

In einem weiteren bevorzugten Ausführungsbeispiel der vorliegenden Erfindung ist das zweite Abschirmelement ein ringförmiger Federring, der in peripherem Kontakt mit dem leitfähigen äußeren Gehäuse des Steckverbinders und dem leitfähigen äußeren Gehäuse des Gegensteckers steht. Dadurch kann eine bessere elektromagnetische Abschirmung zwischen dem Steckverbinder und dem Gegenstecker bereitgestellt werden.

In einer bevorzugten Ausgestaltung kann es sich bei dem zweiten Abschirmelement um eine Rundfeder, eine Dreiecksfeder oder eine Multilamelle handeln und/oder das zweite Abschirmelement kann Bürstenkontakte aufweisen.

Diese Ausgestaltungen haben insbesondere in geeigneter Kombination den Vorteil, dass der betreffende Übergangswiderstand gezielt den Anforderungen der jeweiligen Applikation angepasst werden kann.

In einem weiteren bevorzugten Ausführungsbeispiel der vorliegenden Erfindung ist das erste und/oder das zweite Abschirmelement aus rostfreiem Metall hergestellt. Insbesondere kann es sich bei dem Metall um eine Aluminiumlegierung handeln. Insbesondere kann seine Oberfläche stromlos vernickelt sein.

Alternativ oder ergänzend kann das zweite Abschirmelement aus Kupfer, Stahl, Aluminium oder Messing bestehen oder diese Materialien zumindest aufweisen.

In einem bevorzugten Ausführungsbeispiel der vorliegenden Erfindung umfasst der Steckverbinder ein in dem leitfähigen äußeren Gehäuse aufgenommenes isolierendes Dichtungselement, das in Kontakt mit der äußeren Isolierschicht des Kabels bringbar ist, um eine wasserdichte Dichtung bereitzustellen. Darüber hinaus umfasst der Steckverbinder ein L-förmiges Kompressionselement, um durch eine Verbindung zwischen dem Befestigungselement des Steckverbinders und dem leitfähigen äußeren Gehäuse die Schubkraft gleichzeitig ans Dichtungselement zu übertragen, so dass das Dichtungselement radial expandiert und somit eine feste abdichtende Passung mit dem Kabel bilden kann.

In einem weiteren bevorzugten Ausführungsbeispiel der vorliegenden Erfindung ist das leitfähige äußere Gehäuse aus Metall hergestellt, wobei das Metall stromlos vernickeltes Aluminium ist.

Gemäß einem anderen Aspekt der vorliegenden Erfindung wird eine Steckverbinderanordnung zur Verfügung gestellt, umfassend den obigen Steckverbinder und einen mit dem Steckverbinder gekoppelten Gegenstecker, wobei der Gegenstecker umfasst: einen leitfähigen Kontakt; ein isolierendes inneres Gehäuse, welches einen Befestigungsabschnitt zum Befestigen des Kontakts aufweist; und ein leitfähiges äußeres Gehäuse, welches einen Befestigungsabschnitt zum Befestigen des inneren Gehäuses aufweist. Der Gegenstecker umfasst weiterhin ein mit dem leitfähigen äußeren Gehäuse leitend verbundenes drittes Abschirmelement, das eine isolierende äußere Schicht des mit dem Gegenstecker verbindbaren Kabels kontaktieren kann und einen elektrischen Kontakt mit der elektromagnetischen Abschirmschicht in der isolierenden äußeren Schicht des Kabels herstellen kann, um eine weitere elektromagnetische Abschirmfunktion für das Kabel bereitzustellen. Dabei das erste Abschirmelement, das zweite Abschirmelement und das dritte Abschirmelement jeweils einen elektrischen Kontakt mit dem äußeren Gehäuse des Steckverbinders und dem äußeren Gehäuse des Gegensteckers bilden, um einem durch den Steckverbinder und den Gegenstecker verbindbaren Kabel und der Steckverbinderanordnung eine vollständige elektromagnetische Abschirmung bereitzustellen.

In einem weiteren bevorzugten Ausführungsbeispiel der vorliegenden Erfindung ist das dritte Abschirmelement in Form eines umgekehrten Dreiecks ausgebildet, dessen obere Seite in leitfähigem Kontakt mit dem leitfähigen äußeren Gehäuse des Gegensteckers steht, während die untere Spitze in elektrischem Kontakt mit der elektromagnetischen Abschirmschicht des Kabels bringbar ist.

In einem weiteren bevorzugten Ausführungsbeispiel der vorliegenden Erfindung ist das zweite Abschirmelement aus Metall, insbesondere aus rostfreiem Metall, hergestellt.

In der vorliegenden Erfindung werden ein erstes Abschirmelement, ein zweites Abschirmelement und ein drittes Abschirmelement aus Metall zur Verfügung gestellt, die jeweils mit einer geflochtenen EMV-Schicht des Kabels herstellbar ist und dem leitfähigen äußeren Gehäuse, das ebenfalls aus Metall hergestellt ist, elektrisch leitend verbunden sind. Dadurch wird sowohl dem Kabel als auch dem Steckverbinder und dem damit gesteckten Gegenstecker eine hervorragende elektromagnetische Abschirmung bereitgestellt. Somit wird die Übertragung zuverlässiger und stabiler, ohne elektromagnetische Interferenzen für elektronische Geräte in der Umgebung zu erzeugen. Schließlich verfügen im Stand der Technik viele zur Signalübertragung vorgesehene Steckverbinder über keine Abschirmfunktion, wodurch ihre übertragenen Signale durch die periphere Umgebung elektromagnetisch beeinflusst werden. Der erfindungsgemäße Steckverbinder kann den elektromagnetischen Einfluss auf die periphere Umgebung jedoch vermeiden.

### KURZE BESCHREIBUNG DER ZEICHNUNG

Es zeigen:
- Fig. 1: eine perspektivische Explosionsansicht eines Steckverbinders gemäß der vorliegenden Erfindung.
- Fig. 2: eine Schnittansicht eines Kontakts des Steckverbinders gemäß der vorliegenden Erfindung.
- Fig. 3: eine Schnittansicht eines inneren Gehäuses des Steckverbinders gemäß der vorliegenden Erfindung.
- Fig. 4: eine Schnittansicht eines äußeren Gehäuses und eines Gleitelements des Steckverbinders gemäß der vorliegenden Erfindung.
- Fig. 5: eine perspektivische Darstellung eines montierten Steckverbinders mit einem Kabel gemäß der vorliegenden Erfindung.
- Fig. 6: eine Schnittansicht eines Steckverbinders und eines Kabels nach der Montage gemäß der vorliegenden Erfindung.
- Fig. 7: eine perspektivische Explosionsansicht einer Gegenstecker gemäß der vorliegenden Erfindung.
- Fig. 8: eine Schnittansicht eines Kontakts der Gegenstecker gemäß der vorliegenden Erfindung.
- Fig. 9: eine Schnittansicht eines inneren Gehäuses der Gegenstecker gemäß der vorliegenden Erfindung.
- Fig. 10: eine Schnittansicht eines äußeren Gehäuses der Gegenstecker gemäß der vorliegenden Erfindung.
- Fig. 11: eine perspektivische Darstellung einer Gegenstecker mit einem Kabel gemäß der vorliegenden Erfindung.
- Fig. 12: eine schematische Darstellung der Montage eines Steckverbinders mit einem Kabel gemäß der vorliegenden Erfindung.
- Fig. 13: eine perspektivische Ansicht einer Steckverbinderanordnung mit dem Kabel gemäß der vorliegenden Erfindung.
- Fig. 14: eine Schnittansicht einer Steckverbinderanordnung mit dem Kabel gemäß der vorliegenden Erfindung.

### AUSFÜHRLICHE BESCHREIBUNG

Die vorliegende Erfindung wird im Folgenden anhand von ausführlichen Ausführungsbeispielen und Figuren näher erläutert. Es wird darauf hingewiesen, dass die geschilderten Ausführungsbeispiele nur bevorzugte Ausführungsformen darstellen und nicht als beschränkend für den Schutzumfang der vorliegenden Erfindung angesehen werden sollen. Der durchschnittliche Fachmann auf diesem Gebiet kann auf der Grundlage des Gedankengangs und des offenbarten Inhalts der vorliegenden Erfindung verschiedene weitere Variationen für die vorliegende Erfindung durchführen, und sie sollen als von dem Schutzumfang der vorliegenden Erfindung gedeckt angesehen werden.

Darüber hinaus haben die Begriffe *"axiale Richtung"* und *"Einführrichtung"* in der vorliegenden Erfindung im Wesentlichen die gleiche Bedeutung. Zu beachten ist allerdings, dass das Fachwort *"Einführrichtung"* Richtwirkung aufweist, während *"axiale Richtung"* keine Richtwirkung aufweist. Im Folgenden ist die Richtung der Begriffe "vorne" und "hinten" jeweils auf Grundlage der Einführrichtung definiert. Wenn der Stecker und die Gegenstecker gemäß der vorliegenden Erfindung ineinander eingeführt werden oder eingeführt sind und somit eine Steckverbinderanordnung bilden, sind beim Erläutern des Steckverbinders und des Gegensteckers die Begriffe *"vorne"* und *"hinten"* nicht absolut identisch, wenn die Einführrichtung des Steckverbinders und des Gegensteckers genau umgekehrt ist. Dies ist für den Fachmann auf diesem Gebiet offensichtlich. Darüber hinaus werden die Fachwörter *"innen" und "außen"* jeweils auf Grundlage der radialen Richtung des Steckverbinders definiert, die Fachwörter *"nach innen"*, *"Innenseite"* usw. beziehen sich auf eine entlang der radialen Richtung verlaufenden, der Achsmitte zugewandten Richtung, und die Fachwörter *"nach außen", "Außenseite"* usw. beziehen sich auf eine entlang der radialen Richtung verlaufenden, der Achsmitte abgewandten Richtung.

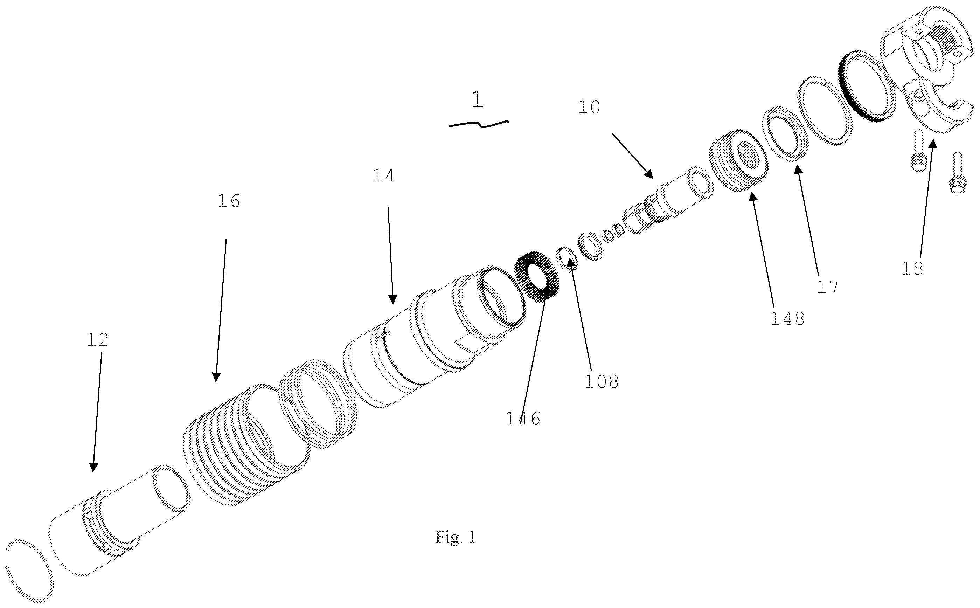

Wie in Fig. 1 dargestellt, umfasst der Stecker 1 gemäß der vorliegenden Erfindung im Wesentlichen einen Metallkontakt 10, ein inneres Gehäuse 12, ein äußeres Gehäuse 14 und ein Gleitelement 16, das auf dem äußeren Gehäuse 14 gleiten kann.

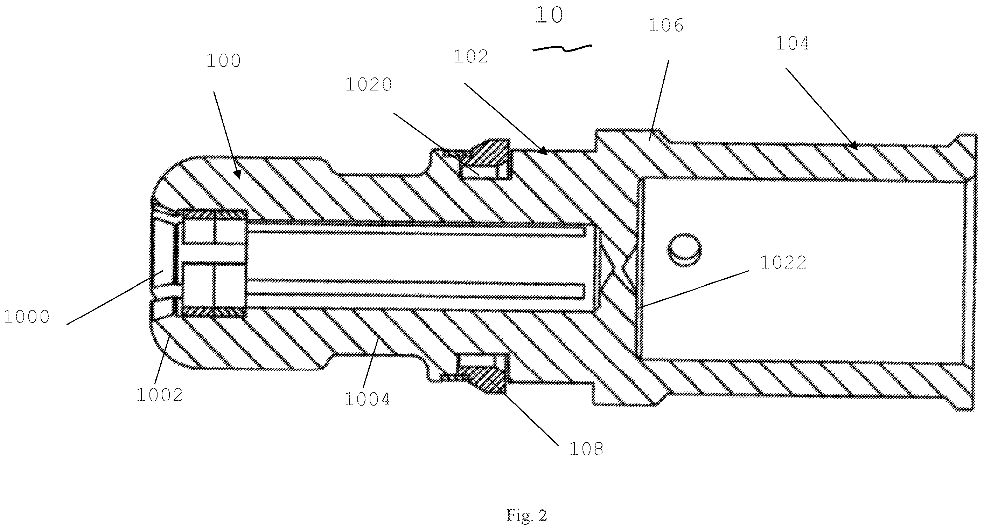

Wie in Fig. 2 dargestellt, ist die Gesamtform des Kontakts 10 im Wesentlichen zylindrisch, wobei der Kontakt aus C1100 Kupfer einteilig hergestellt ist. Aus Einführrichtung betrachtet, umfasst der Kontakt aufeinanderfolgend einen Kontakteinführabschnitt 100, einen Kontaktbefestigungsabschnitt 102 und einen Kontaktverbindungsabschnitt 104. Dabei ist der Innendurchmesser des Kontakts 10 an dem Kontakteinführabschnitt 100 und dem Kontaktbefestigungsabschnitt 102 kleiner als der Innendurchmesser an dem Kontaktverbindungsabschnitt 104, wobei an dem Kontaktbefestigungsabschnitt 102 eine der Einführrichtung abgewandte Kabelabschlussfläche 1022 definiert ist. An der Verbindungsstelle zwischen dem Kontaktbefestigungsabschnitt 102 und dem Kontaktverbindungsabschnitt 104 weist der Kontakt 10 einen Anschlagsabschnitt 106 an der äußeren Oberfläche auf, wobei es sich bei dem Anschlagsabschnitt 106 um einen ringförmigen Flansch handelt.

Der Kontakteinführabschnitt 100 umfasst in seiner Umfangsrichtung mehrere sich entlang der axialen Richtung erstreckende Schlitze 1000, die sich bevorzugt zum Kontaktbefestigungsabschnitt 102 hin erstrecken. Darüber hinaus weist die äußere Oberfläche des Kontakteinführabschnitts 100 an dem vorderen Ende aus der Einführrichtung her gesehen eine äußere Rundung auf, um ein Einführen in den Kontakt 20 einer entsprechenden Gegenstecker 2 schnell und einfach zu realisieren.

Entlang der Einführrichtung weist der Kontakt 10 an dem hinteren Ende des Kontakteinführabschnitts 100 ferner eine Aussparung 1004 auf, wobei der Kontakt 10 an dem vorderen Ende des Kontaktbefestigungsabschnitts 102 eine Kontaktbefestigungsaussparung 1020 aufweist, um ein aus Gummi hergestelltes elastisches Befestigungselement 108 aufzunehmen.

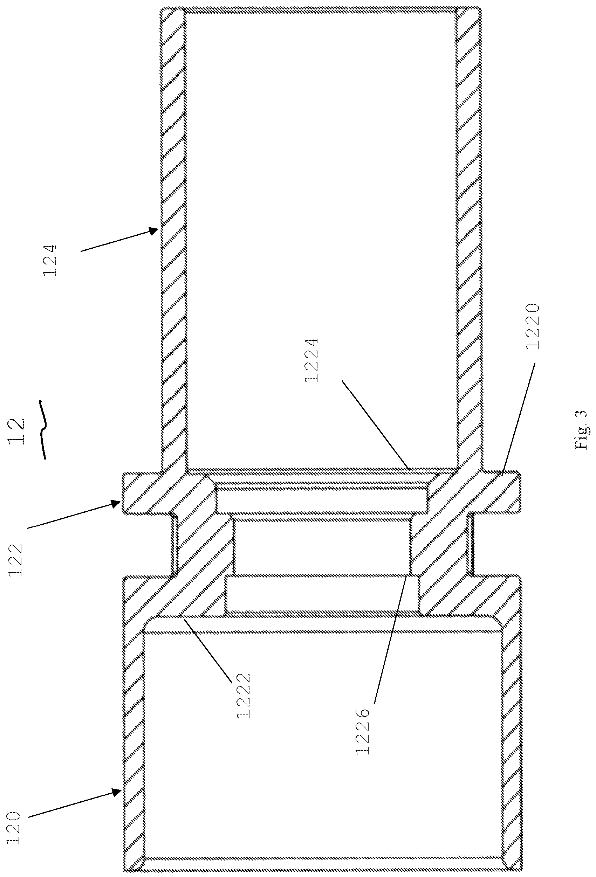

Wie in Fig. 3 dargestellt, ist das innere Gehäuse 12 des Steckverbinders 1 ein isolierendes Gehäuse, das eine im Wesentlichen zylindrische Gesamtform aufweist und aus einem Isoliermaterial, bevorzugt aus isolierendem Gummi (EPDM und SR) oder Kunststoff (PPS) einteilig hergestellt ist. Von der Einführrichtung betrachtend umfasst das innere Gehäuse aufeinanderfolgend einen Einführabschnitt des inneren Gehäuses 120, einen Befestigungsabschnitt des inneren Gehäuses 122 und einen Verbindungsabschnitt des inneren Gehäuses 124. Der Außendurchmesser des Befestigungsabschnitts des inneren Gehäuses 122 ist bevorzugt gleich wie der Außendurchmesser des Einführabschnitts des inneren Gehäuses 120, während der Innendurchmesser des Befestigungsabschnitts des inneren Gehäuses 122 kleiner als der Innendurchmesser des Einführabschnitts des inneren Gehäuses 120 ist. Somit wird zwischen den beiden ein nach innen hervorstehender Vorsprung gebildet, der eine der Einführrichtung zugewandte Sperrfläche 1222 aufweist. Durch die Sperrfläche 1222 kann der Kontakt bei zu starker Kraftanwendung beim Einführen vor Beschädigung geschützt werden.

Darüber hinaus ist der Innendurchmesser des Befestigungsabschnitts des inneren Gehäuses 122 im Wesentlichen gleich wie der des Kontaktbefestigungsabschnitts 102, während der Befestigungsabschnitt des inneren Gehäuses einen Treppenstufenabschnitt 1226 aufweist, um den Befestigungsabschnitt des inneren Gehäuses mit dem in der Befestigungsaussparung 1020 des Kontakts 10 aufgenommenen elastischen Befestigungselement 108 des Kontakts zu verbinden, so dass verhindert werden kann, dass sich der Kontakt 10 gegen die Einführrichtung bewegt. Im Vergleich zum Befestigungsabschnitt des inneren Gehäuses 122 ist der Innendurchmesser des Verbindungsabschnitts des inneren Gehäuses 124 größer als der Innendurchmesser des Befestigungsabschnitts des inneren Gehäuses 122, während sein Außendurchmesser kleiner als der Außendurchmesser des Befestigungsabschnitts des inneren Gehäuses 122 ist. Dadurch wird an der Innen- und Außenseite der Einfügungsstelle jeweils eine Kontaktbegrenzungsfläche 1224 und eine Begrenzungsfläche des inneren Gehäuses 1220 definiert.

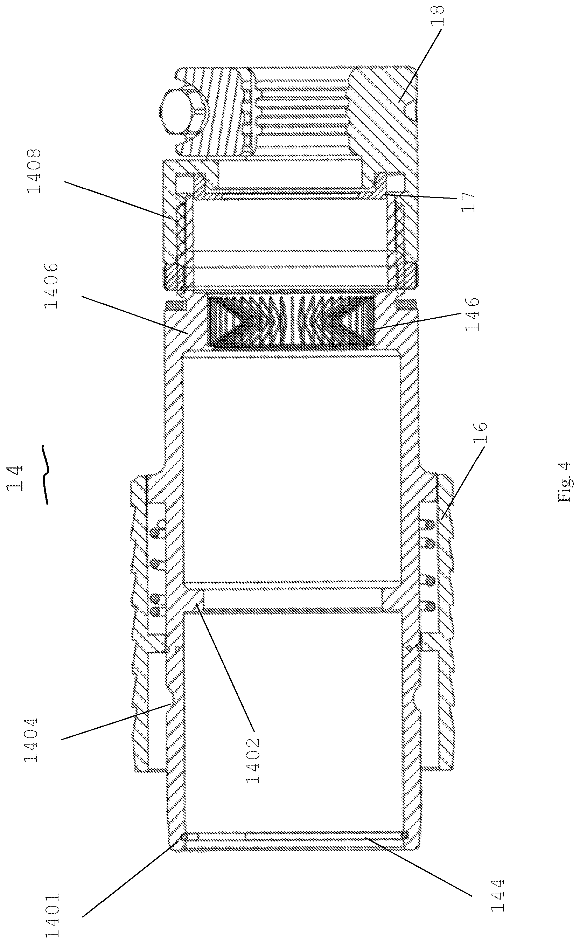

Wie in Fig. 4 dargestellt, ist das äußere Gehäuse 14 des Steckverbinders 1 aus Metall hergestellt, welches ebenfalls eine im Wesentlichen zylindrische Gesamtform hat. An der inneren Oberfläche von seinem vorderen Ende ist eine Nut 1401 vorgesehen, um einen elastischen Haltering 144 aufzunehmen und somit das innere Gehäuse 12 innerhalb des äußeren Gehäuses 14 zu halten. An der inneren Oberfläche des mittleren Abschnitts weist das äußere Gehäuse 14 einen nach innen hervorstehenden Begrenzungsvorsprung des innere Gehäuses 1402, um das äußere Gehäuse mit der Begrenzungsfläche des inneren Gehäuses 1220 des inneren Gehäuses 12 zu verbinden und somit eine Bewegung des inneren Gehäuses 12 gegen die Einführrichtung zu begrenzen.

Das äußere Gehäuse 14 weist an seinem hinteren Ende einen nach innen hervorstehenden Abschirmelement-Aufnahmeabschnitt 1406 zur Aufnahme des Abschirmelements 146 auf, um ein angeschlossenes Hochstromkabel 6 elektromagnetisch abzuschirmen.

Darüber hinaus ist hinter dem Abschirmelement-Aufnahmeabschnitt 1406 ein Dichtungselement-Aufnahmeabschnitt 1408 an dem äußeren Gehäuse 14 angeordnet, um das elastische Dichtungselement 148 an der Innenseite aufzunehmen. An der äußeren Oberfläche des Dichtungselements-Aufnahmeabschnitts 1408 ist ein Gewinde an dem äußeren Gehäuse vorgesehen, um eine Gewindeverbindung mit dem ebenfalls aus Metall hergestellten Befestigungselement 18 zu bilden, so dass das elastische Dichtungselement 148 an dem Dichtungselements-Aufnahmeabschnitt 1408 befestigt wird.

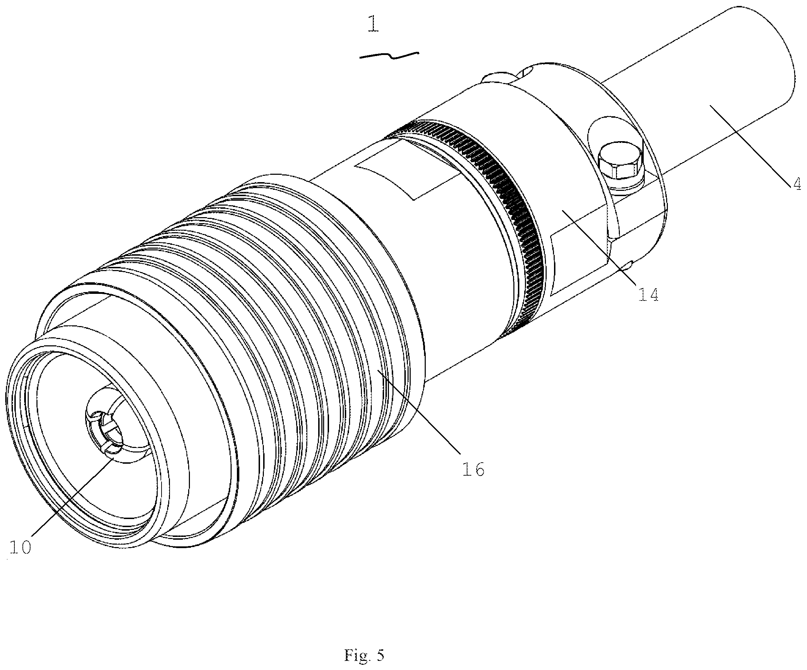

Fig. 5 zeigt perspektivisch einen Steckverbinder gemäß der vorliegenden Erfindung mit einem daran angeschlossenen Kabel. Währen der Montage wird die isolierende äußere Schicht am vorderen Ende des Kabels 4 auf einer Länge von etwa 30 mm zusammen mit dem EMV-Geflecht entfernt, um den Drahtkern im Inneren freizulegen. Dann wird das Befestigungselement 18 des Steckverbinders 1, der L-förmige Kompressionsring 17 und das Dichtungselement 148 gemäß der vorliegenden Erfindung aufeinanderfolgend gegen die Einführrichtung auf das Kabel 4 geschoben. Anschließend wird der Kontakt 10 auf den Drahtkern des Kabels 6 geschoben, bis die Crimp-Position erreicht ist. Jetzt liegt der vordere Endabschnitt des Drahtkerns des Kabels 6 an die Kabelabschlussfläche 1022 des Verbindungsabschnitts 102 der Kontakte 10 an. An der Crimp-Position wird der Kontaktverbindungsabschnitt 104 des Kontakts 10 mit einem Crimp-Werkzeug gedrückt, so dass die innere Oberfläche des Kontaktverbindungsabschnitts 104 fest an dem Drahtkern des Kabels 4 anliegt.

Gleichzeitig oder davor oder danach wird das innere Gehäuse des Steckverbinders 1 gemäß der vorliegenden Erfindung ins äußere Gehäuse 14 eingepasst. Nämlich wird das innere Gehäuse 12 gegen die Einführrichtung ins äußere Gehäuse 14 gesteckt, bis die Begrenzungsfläche 1220 des inneren Gehäuses 12 und der Begrenzungsvorsprung 1402 des äußeren Gehäuses 14 aneinander anliegen. Jetzt springt der in der Nut 1401 des äußeren Gehäuses 14 aufgenommene elastische Haltering 144 nach innen, um eine Vorwärtsbewegung des inneren Gehäuses 12 entlang der Einführrichtung zu beschränken. Somit ist das innere Gehäuse 12 des Steckverbinders 1 fest in dem äußeren Gehäuse 14 befestigt.

Wird der Kontakt 10 ins Innere Gehäuse 12, an dem das äußere Gehäuse 14 schon montiert ist, gesteckt, bis ein *"Klick"* zu hören ist, wird dadurch angezeigt, dass der Kontakt 10 in dem inneren Gehäuse 12 die Einrastposition erreicht hat. An der Einrastposition liegt der Anschlagsabschnitt 106 des Kontakts 10 und die Kontaktbegrenzungsfläche 1224 des inneren Gehäuses 12 aneinander an, um zu verhindern, dass der Kontakt 10 sich weiter nach vorne bewegt, während das in der Kontaktbefestigungsaussparung 1020 des Kontakts befindliche elastischen Befestigungselement 108 radial nach außen hochspringt und den Treppenstufenabschnitt 1226 des inneren Gehäuses 12 umschließt, um eine Rückwärtsbewegung des Kontakts 10 zu verhindern.

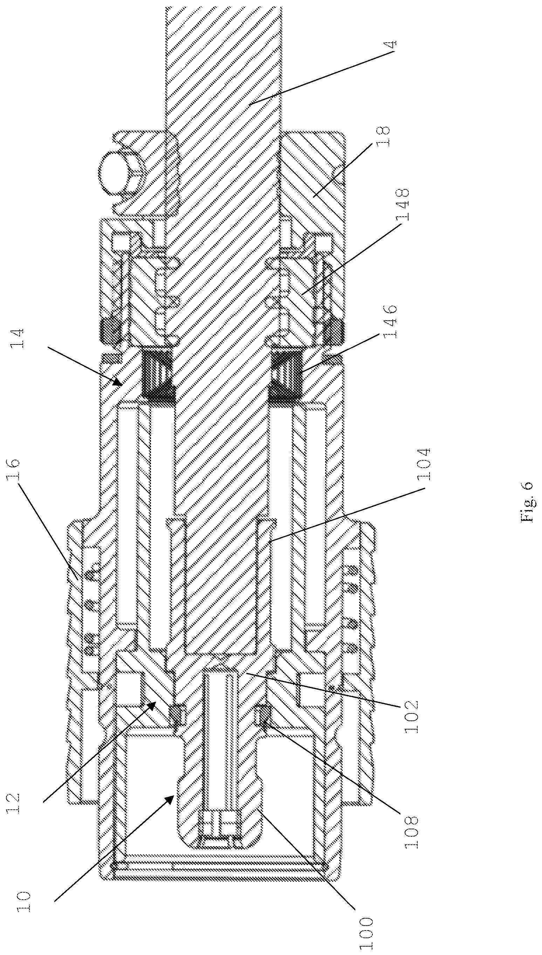

Wird das Dichtungselement 148 entlang der Einführrichtung ins Innere des Dichtungselements-Aufnahmeabschnitts 1408 des äußeren Gehäuses 14 eingeschoben. ist das Befestigungselement 18 per Gewinde an dem äußeren Gehäuse 14 verbunden. In diesem Fall schiebt das Befestigungselement 18 den L-förmigen Kompressionsring 17 nach vorne, so dass durch die vordere Oberfläche des L-förmigen Kompressionsrings 17 die Schubkraft gleichmäßig auf das Dichtungselement 148 ausgeübt wird (siehe Fig. 6), so dass das Dichtungselement 148 entlang der axialen Richtung komprimiert wird, um eine Expansion entlang der radialen Richtung zu erzeugen. Somit entsteht ein enger Kontakt mit der äußeren Oberfläche des Kabels 4, wodurch eine gute Dichtungswirkung erhalten wird. Anschließend wird die Befestigungsschraube angezogen, um das Kabel 4 fest an dem Stecker 1 zu befestigen.

In Fig. 6 wird eine Schnittansicht des Steckverbinders 1 und des Kabels 4 nach der Montage erläutert. Aus Fig. 6 ist ersichtlich, dass der Kontakt 2 durch das in der Aussparung 1020 aufgenommene elastische Befestigungselement 108 der Kontakt und der Anschlagsabschnitt 106 jeweils mit dem Treppenstufenabschnitt 1226 und der Kontaktbegrenzungsfläche 1224 an der Innenseite des inneren Gehäuses 12 verbunden und somit in der vorgesehenen Position des inneren Gehäuses 12 befestigt sind, wobei sich der Kontakt aufgrund der Passung zwischen mit dem inneren Gehäuse nicht in axialer Richtung nach vorne oder hinten bewegen kann. Durch die Begrenzungsoberfläche 1220 und die vordere Endfläche des inneren Gehäuses passt das innere Gehäuse 12 jeweils mit dem Begrenzungsvorsprung 1402 des äußeren Gehäuses 14 und dem in der Nut 1401 aufgenommenen elastischen Haltering 144 zusammen und wird somit an der vorgesehenen Position des äußeren Gehäuses 14 befestigt, wobei sich das innere Gehäuse aufgrund der Passung zwischen dem inneren Gehäuse und dem äußeren Gehäuse in axialer Richtung nicht nach vorne oder hinten bewegen kann.

Darüber hinaus ist als das in dem Abschirmelement-Aufnahmeabschnitt 1406 des äußeren Gehäuses 14 aufgenommene Abschirmelement 146 eine ringförmige Feder vorgesehen, deren innere Form als ein umgekehrtes Dreieck ausgebildet ist. Aus der Schnittansicht ist ersichtlich, dass das Abschirmelement 146 an der Innenseite die Form einer Spitze aufweist, wobei der Innendurchmesser etwas kleiner als der Außendurchmesser der isolierenden äußeren Schicht des Kabels 6 ist. Beim Verbinden des Kabels 4 und des Kontakts 10, wenn dies ins Innere Gehäuse 12 und äußere Gehäuse 14 gesteckt wird, neigt sich das in dem Abschirmelement-Aufnahmeabschnitt 1406 des äußeren Gehäuses 14 aufgenommene Abschirmelement 146 beim Einstecken des Kabels 4 entlang der Einführrichtung, und die Spitze an der Innenseite des Abschirmelements dringt durch die isolierende äußere Schicht des Kabels 4 und berührt die Schicht des EMV-Geflechts in der isolierenden äußeren Schicht des Kabels, nämlich die elektromagnetische Abschirmschicht, so dass das durch die Übertragung von hohem Wechselstrom erzeugte elektromagnetische Feld nicht nach Außen übertragen werden kann. Dadurch wird das Kabel 4 besser elektromagnetisch abgeschirmt.

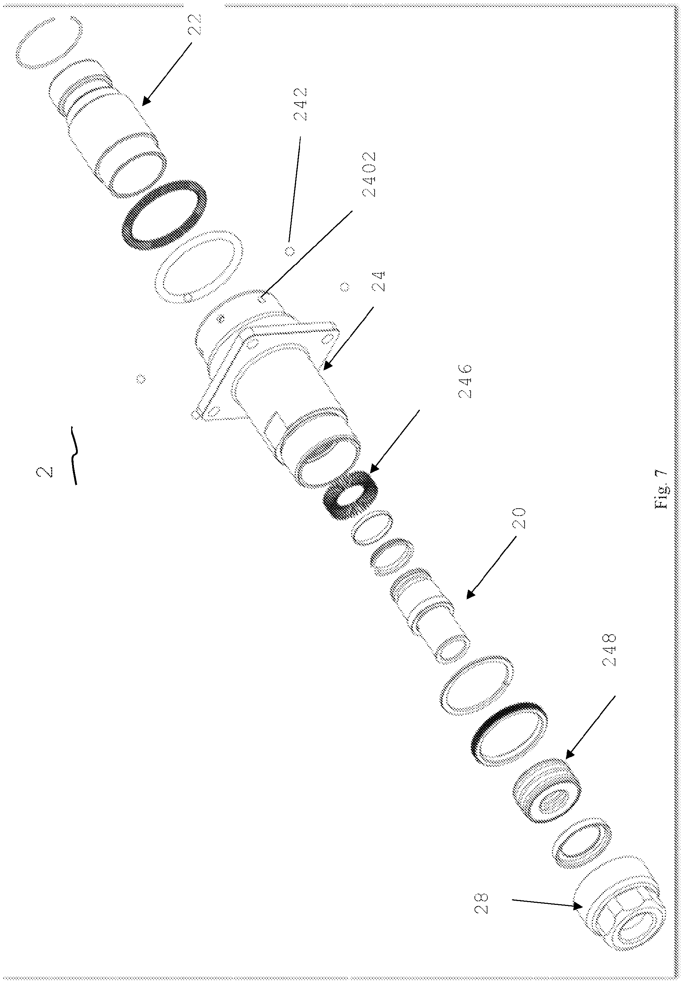

In Fig. 7 wird eine für den Stecker 1 vorgesehene Gegenstecker 2 erläutert. Die Gegenstecker 2 umfasst ebenfalls hauptsächlich einen Kontakt 20, ein inneres Gehäuse 22 und ein äußeres Gehäuse 24.

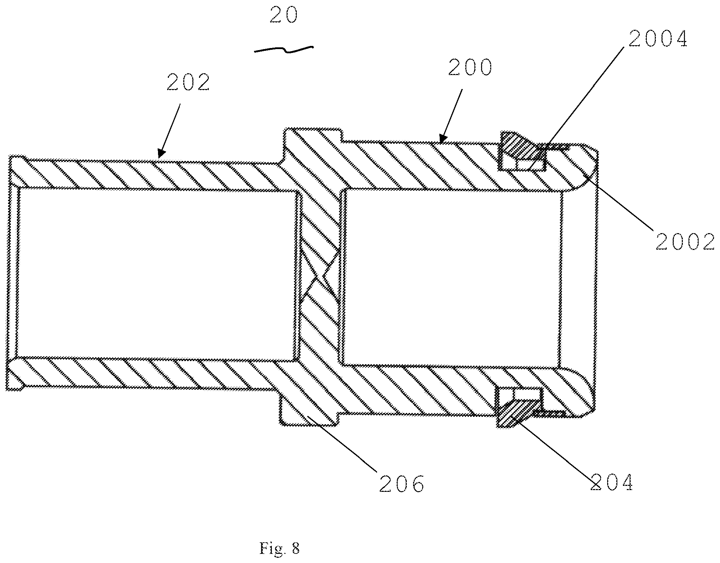

Wie in Fig. 8 dargestellt, ist die Gesamtform des Kontakts 20 im Wesentlichen zylindrisch, wobei der Kontakt aus C1100 Kupfer einteilig hergestellt ist. Anders als der Stecker 1 umfasst der Kontakt von der Einführrichtung betrachtend aufeinanderfolgend nur einen Kontakteinführabschnitt 200 und einen Kontaktverbindungsabschnitt 202. Dabei ist der Innendurchmesser des Kontakts 20 an dem Kontakteinführabschnitt 200 im Wesentlichen gleich wie der Innendurchmesser m Kontaktverbindungsabschnitt 202. Darüber hinaus wird der Kontakteinführabschnitt 200 ebenfalls als Kontaktbefestigungsabschnitt verwendet und steht an der äußeren Oberfläche des hinteren Endes entlang der radialen Richtung nach außen hervor, um einen ringförmigen Flansch, nämlich einen Anschlagsabschnitt 206, auszubilden. Der Kontakteinführabschnitt 200 weist am vorderen Ende eine innere Rundung 2002 auf, um das Zusammenführen mit der äußeren Rundung des Kontakts 10 des entsprechenden Steckverbinders 1 zu erleichtern, so dass ein Einführen schnell und einfach durchzuführen ist. Entlang der Einführrichtung weist der Kontakt 20 an dem vorderen Ende des Kontakteinführabschnitts 200 eine Kontaktbefestigungsaussparung 2004 auf, um ein aus Gummi hergestelltes elastisches Befestigungselement 204 aufzunehmen.

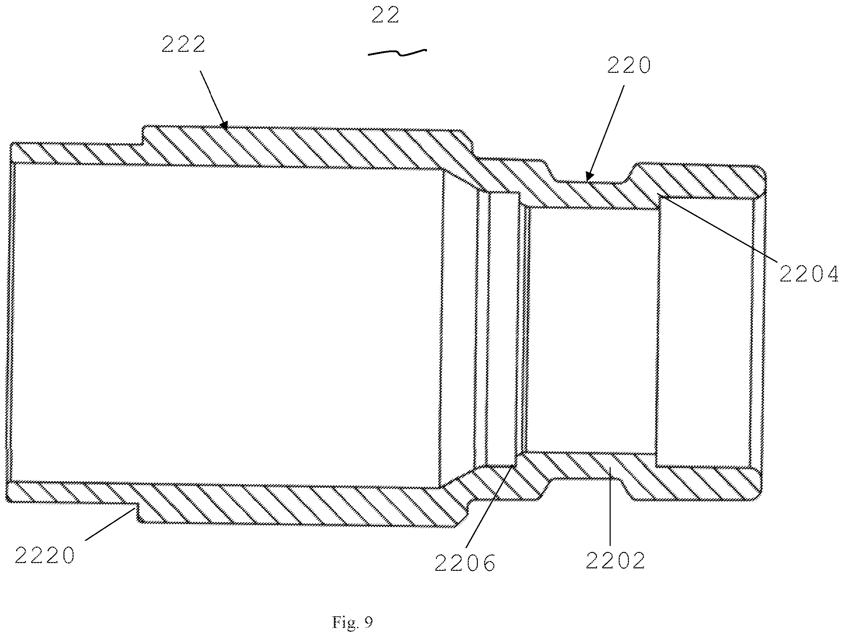

Wie in Fig. 9 dargestellt, ist das innere Gehäuse 22 der Gegenstecker 2 ein isolierendes Gehäuse, das eine im Wesentlichen zylindrische Gesamtform hat und aus einem Isoliermaterial, bevorzugt aus isolierendem Gummi (EPDM und SR) oder Kunststoff (PPS) einteilig geformt ist. Von der Einführrichtung betrachtend umfasst das innere Gehäuse aufeinanderfolgend einen Einführabschnitt des inneren Gehäuses 220 und einen Befestigungsabschnitt des inneren Gehäuses 222. Der Außendurchmesser des Befestigungsabschnitts des inneren Gehäuses 222 ist bevorzugt größer als der Außendurchmesser des Einführabschnitts des inneren Gehäuses 220. Bevorzugt wird der Einführabschnitt des inneren Gehäuses 220 ebenfalls als Befestigungskontakt verwendet. Dazu weist der mittlere Abschnitt des Einführabschnitts des inneren Gehäuses 220 einen nach innen gebogenen Befestigungsringabschnitt 2202 auf. Das hintere Segment des Befestigungsabschnitts des inneren Gehäuses 222 weist der Einführrichtung abgewandte Treppenstufen auf, die auf die entsprechenden Treppenstufen des äußeren Gehäuses 24 abgestimmt sind, um zu verhindern, dass das innere Gehäuse 22 sich gegen die Einführrichtung bewegt.

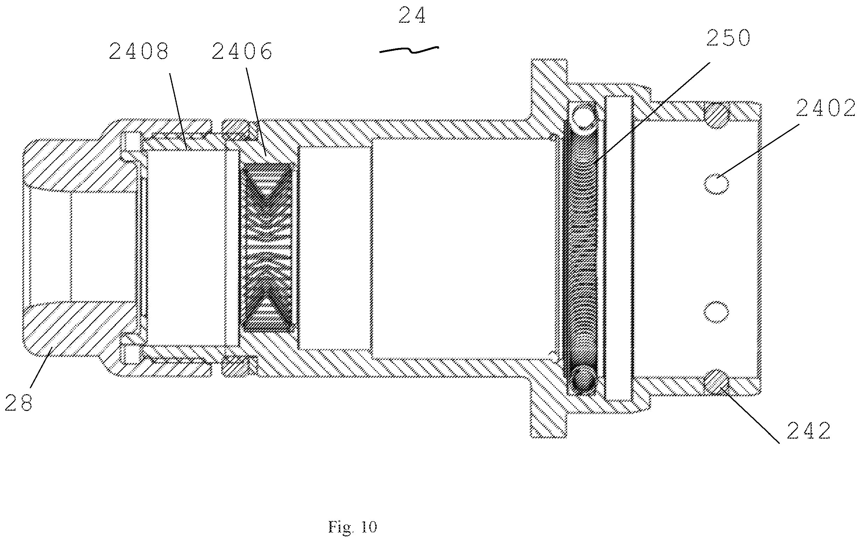

Wie in Fig. 10 dargestellt, ist das äußere Gehäuse 24 der Gegenstecker 2 aus leitfähigem Metall, bevorzugt aus nickelplattiertem Aluminium, hergestellt, wobei das äußere Gehäuse auch im Wesentlichen eine zylindrische Gesamtform hat.

Das äußere Gehäuse 24 weist an seinem hinteren Ende einen nach innen hervorstehenden Abschirmelement-Aufnahmeabschnitt 2406 zur Aufnahme des Abschirmelements 146 auf, um ein angeschlossenes Hochstromkabel 6 elektromagnetisch abzuschirmen. Das Abschirmelement 246 ist aus Metall hergestellt und hat die Form eines umgekehrten Dreiecks. Seine äußere Seite berührt das äußere Gehäuse 24, um eine leitfähige Verbindung herzustellen, so dass das Kabel besser elektromagnetisch abgeschirmt wird.

Darüber hinaus umfasst das äußere Gehäuse 24 an seinem Einführabschnitt für das äußere Gehäuse 14 des Steckverbinders 1 entlang der Einführrichtung von vorne nach hinten aufeinanderfolgend eine Vertiefung 2402 zur Aufnahme der Verriegelungsvorrichtung, einen Abschirmelement-Aufnahmeabschnitt 2406 und einen Dichtungselement-Aufnahmeabschnitt 2408, um jeweils eine Verriegelungsvorrichtung 242, ein Abschirmelement 246 und ein Dichtungselement 248 aufzunehmen. In der vorliegenden Erfindung handelt es sich bei der Verriegelungsvorrichtung 242 bevorzugt um eine Vielzahl an Verriegelungswülsten, wobei es sich bei der Vertiefung 2402 um mehrere entlang der radialen Richtung durch das äußere Gehäuse 24 gehende Durchgangslöcher handelt, und wobei das in dem Abschirmelement-Aufnahmeabschnitt 2406 aufgenommene Abschirmelement 246 ein ringförmiger Federring ist.

Darüber hinaus ist an der äußeren Oberfläche des Dichtungselement-Aufnahmeabschnitts 2408 ein Gewinde am äußeren Gehäuse 24 vorgesehen, um eine Gewindeverbindung mit dem ebenfalls aus Metall hergestellten Befestigungselement 28 zu bilden, so dass das elastische Dichtungselement 50 in dem Dichtungselement-Aufnahmeabschnitt 2408 befestigt wird.

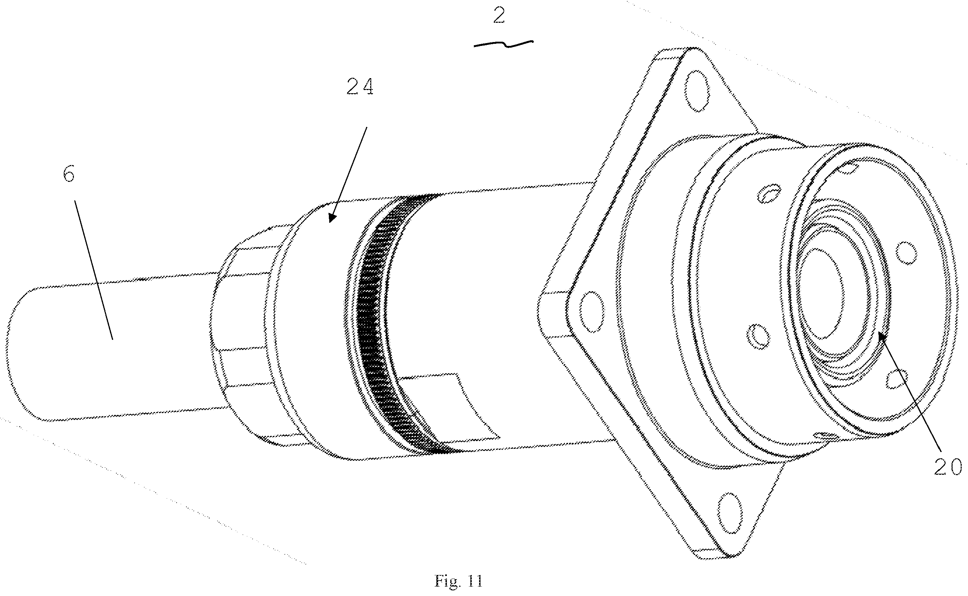

Fig. 11 zeigt perspektivische Ansicht einer montierten Gegenstecker 2 gemäß der vorliegenden Erfindung mit dem angeschlossenen Kabel 6. Bei der Montage der Gegenstecker 2 und dem Kabel wird das Kabel 6 ohne den letzten Schritt zum Festdrehen der Schraube fest an der Gegenstecker 2 befestigt. Der Grund liegt darin, dass die Gegenstecker 2 in der Regel in einem Gerät befestigt ist, deshalb existiert keine aufgrund des Ziehens des Kabels 6 erzeugte Zugkraft. Selbstverständlich kann in einer optionalen Lösung auch eine Bolzenbefestigungsvorrichtung an dem Befestigungselement 28 des äußeren Gehäuses 24 der Gegenstecker 2 angeordnet sein, wie beim äußeren Gehäuse 14 des Steckverbinders 1.

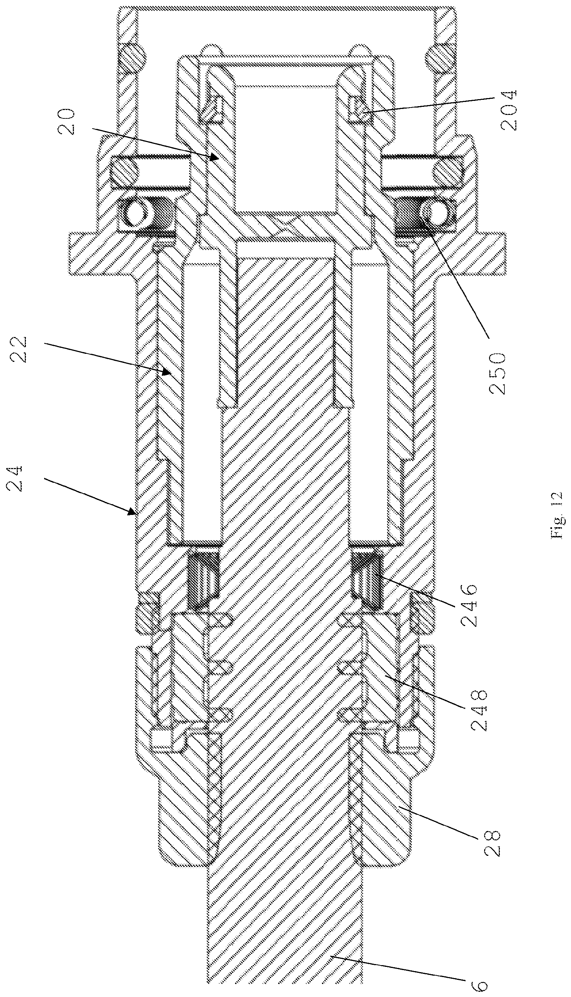

In Fig. 12 wird eine Schnittansicht der Gegenstecker 2 und des Kabels 6 nach der Montage erläutert. Aus Fig. 12 ist ersichtlich, dass der Kontakt 20 durch das in der Kontaktbefestigungsaussparung 2004 aufgenommene elastische Befestigungselement 204 und den Anschlagabschnitt 206 jeweils mit dem Treppenstufenabschnitt 2204 und der Kontaktbegrenzungsfläche 2206 an der Innenseite des inneren Gehäuses 22 verbunden und somit an einer angemessenen Position des inneren Gehäuses 22 befestigt ist, wobei aufgrund der Passung zwischen dem Kontakt und dem inneren Gehäuse sich der Kontakt nicht in der axialen Richtung nach vorne und hinten bewegen lässt. Das innere Gehäuse 22 ist durch eine Begrenzungsfläche des inneren Gehäuses 2220 mit der Schulter 2410 des äußeren Gehäuses 24 verbunden und wird somit an der vorgesehenen Position des äußeren Gehäuses 24 befestigt, wobei aufgrund der Passung zwischen dem inneren Gehäuse und dem äu-ßeren Gehäuse sich das innere Gehäuse nicht in axialer Richtung nach hinten bewegen kann. Darüber hinaus ist als das in dem Abschirmelement-Aufnahmeabschnitt 2406 des äußeren Gehäuses 24 aufgenommene Abschirmelement 246 eine ringförmige Feder vorgesehen, deren innere Form als ein umgekehrtes Dreieck ausgebildet ist. Aus der Schnittansicht ist ersichtlich, dass das Abschirmelement an der Innenseite in Form einer Spitze ausgebildet ist, wobei sein Innendurchmesser etwas kleiner als der Außendurchmesser der isolierenden äußeren Schicht des Kabels 6 ist. Beim Verbinden des Kabels 6 und des Kontakts 20, wenn dies ins Innere Gehäuse 22 und äußere Gehäuse 24 gesteckt wird, neigt sich das in dem Abschirmelement-Aufnahmeabschnitt 2406 des äußeren Gehäuses 24 aufgenommene Abschirmelement 246 beim Einstecken des Kabels 6 entlang der Einführrichtung, und die Spitze an der Innenseite des Abschirmelements dringt durch die isolierende äußere Schicht des Kabels 6 durch und berührt die Schicht des EMV-Geflechts in der isolierenden äußeren Schicht des Kabels, nämlich die elektromagnetische Abschirmschicht. Dadurch wird das Kabel 6 besser elektromagnetisch abgeschirmt.

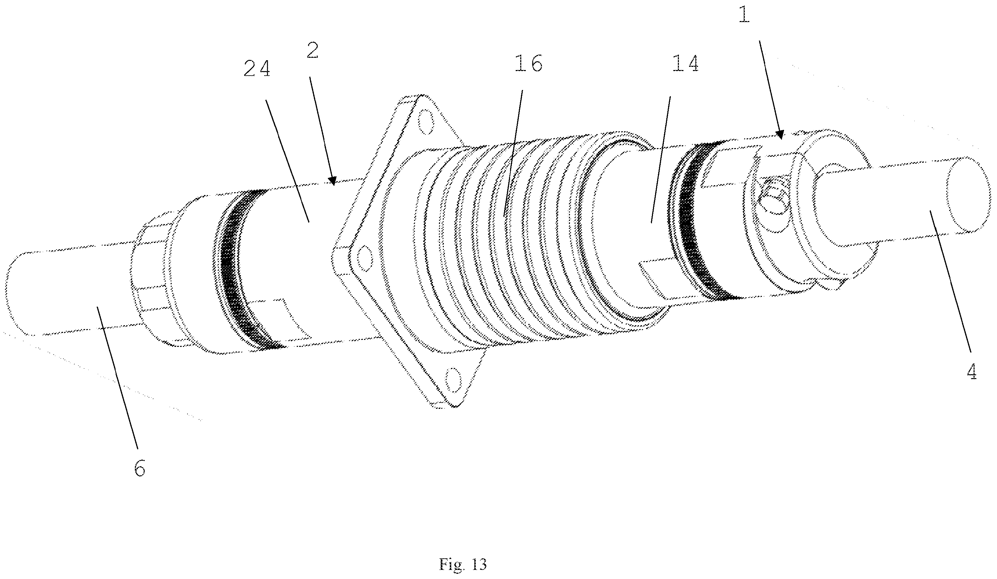

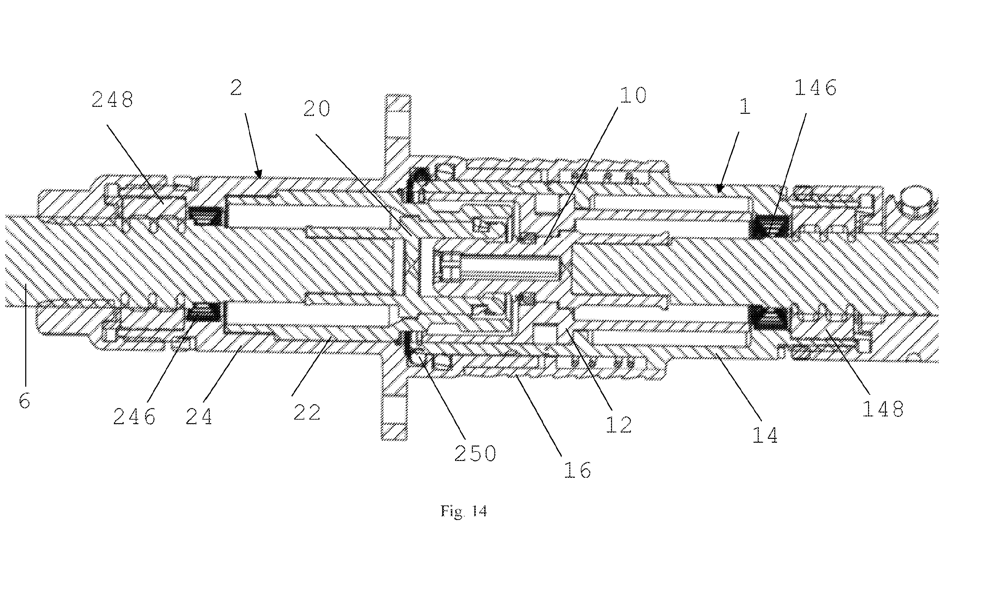

In den Figuren 13 und 14 wird die Steckverbinderanordnung erläutert, wobei der Steckverbinder 1 in die Gegenstecker 2 eingeführt ist. Beim Koppeln des Steckverbinders 1 mit der Gegenstecker 2 werden diese zuerst aufeinander ausgerichtet und ineinander eingeführt. Das äußere Gehäuse 24 des Gegensteckers 2 schiebt das Gleitelement 16 an dem äußeren Gehäuse 14 des Steckverbinders nach hinten, die Feder darin wird komprimiert, bis die Verriegelungsvorrichtung 242 an dem äußeren Gehäuse 24 des Gegensteckers 2 in die am äußeren Gehäuse 14 des Steckverbinders 1 vorgesehene Nut 1401 einrastet. Insbesondere ist es aus der Schnittansicht gemäß Fig. 14 ersichtlich, dass die in der Vertiefung 2402 des äußeren Gehäuses 24 aufgenommene Verriegelungsvorrichtung 242 des Gegensteckers 2 an der Einführposition mit der Nut 1401 des äußeren Gehäuses 14 des Steckverbinders 1 verbunden ist. Das Einführen erzeugt ein "Klick"-Geräusch, um den Benutzer darauf hinzuweisen, dass die richtige Einführposition erreicht wurde, und um zu vermeiden, dass der Benutzer weiter Kraft ausübt. Dadurch wird der Kontakt 10 des Steckverbinders 1 und der Kontakt 20 der Gegenstecker 2 zu einem gewissen Grad davor geschützt, dass diese bei zu starker Kraftanwendung beim Einführen beschädigt werden. Darüber hinaus kann ein Ablösen des Steckverbinders 1 und der Gegenstecker 2 innerhalb eines bestimmten Zugkraftbereichs verhindert werden, um zu vermeiden, dass die Stromübertragungsqualität beeinträchtigt wird.

Darüber hinaus ist es aus der Schnittansicht gemäß Fig. 14 ersichtlich, dass das am hinteren Ende des äußeren Gehäuses 14 des Steckverbinders 1 aufgenommene Abschirmelement 146 die äußere Isolierschicht des Kabels 4 durchdringt und mit der Schicht des EMV-Geflechts im Inneren, nämlich der elektromagnetischen Abschirmschicht, eine leitfähige Verbindung herstellt, um das Kabel 4 zusätzlich elektromagnetisch abzuschirmen. Das am hinteren Ende des äußeren Gehäuses 24 des Gegensteckers 2 aufgenommene Abschirmelement 246 durchdringt die äußere Isolierschicht des Kabels 6 und stellt mit der Schicht des EMV-Geflechts im Inneren, nämlich der elektromagnetischen Abschirmschicht, eine leitfähige Verbindung her, um das Kabel 6 zusätzlich elektromagnetisch abzuschirmen. Darüber hinaus berührt der in dem äußeren Gehäuse 24 des Gegensteckers 2 aufgenommene Abschirmring 250 das vordere Ende des äußeren Gehäuses 14 des Steckverbinders 1. Dadurch, dass das Abschirmelement 146 mit dem metallischen äußeren Gehäuse 14 des Steckverbinders 1, das Abschirmelement 246 mit dem metallischen äußeren Gehäuse 24 des Gegensteckers 2, und der Abschirmring 250 mit dem metallischen äußeren Gehäuse 14 des Steckverbinders 1 und dem metallischen äußeren Gehäuse 24 der Gegenstecker 2 leitend verbunden ist, werden die Kabel 4 und 6 besser elektromagnetisch abgeschirmt, so dass beim Übertragen hoher Ströme lediglich ein verringerter elektromagnetischer Einfluss auf die in der peripheren Umgebung vorhandenen elektronischen Komponenten, wie Leiterplatten usw., erzeugt wird.

Oben ist die Steckverbinderanordnung mit dem Stecker und dem Gegenstecker gemäß der vorliegenden Erfindung näher erläutert. Allerdings stellen die ausführlichen Ausführungsbeispiele nur bevorzugte Ausführungsformen dar, wobei die Struktur der Steckverbinderanordnung der vorliegenden Erfindung nicht beschränkt ist. Der Fachmann auf diesem Gebiet kann auf der Grundlage der Ausführungsbeispiele der vorliegenden Erfindung die konkrete Struktur des Steckverbinders und des Gegensteckers entsprechend modifizieren. Beispielsweise können die detaillierten Strukturen des Inneren Gehäuses, des äußeren Gehäuses des Steckverbinders und des Gegensteckers und des Steckverbindungsabschnitts oder des Befestigungsabschnitts für die Kontakte gegenseitig ausgetauscht werden, solange die Passung zwischen den beiden die entsprechende Funktion sicherstellt.

### Bezugszeichenliste

- 1: Steckverbinder
- 10: Kontakt
- 100: Kontakteinführabschnitt
- 1000: Schlitz
- 1002: Äußere Rundung
- 1004: Aussparung
- 102: Kontaktbefestigungsabschnitt
- 1020: Befestigungsaussparung
- 1022: Kabelabschlussfläche
- 104: Kontaktverbindungsabschnitt
- 106: Anschlagsabschnitt
- 108: Elastisches Befestigungselement des Kontakts

- 12: Inneres Gehäuse
- 120: Einführabschnitt des inneren Gehäuses
- 122: Befestigungsabschnitt des inneren Gehäuses
- 1220: Begrenzungsfläche des inneren Gehäuses
- 1222: Sperrfläche
- 1224: Kontaktbegrenzungsfläche
- 1226: Treppenstufenabschnitt
- 124: Verbindungsabschnitt des inneren Gehäuses

- 14: Äußeres Gehäuse
- 1401: Nut
- 1402: Begrenzungsvorsprung
- 1404: Verriegelungsnut
- 1406: Abschirmelement-Aufnahmeabschnitt
- 1408: Dichtungselement-Aufnahmeabschnitt
- 144: Elastischer Haltering
- 146: Abschirmelement
- 148: Dichtungselement

- 16: Gleitelement
- 17: L-förmiger Kompressionsring
- 18: Befestigungselement

- 2: Gegenstecker
- 20: Kontakt
- 200: Kontakteinführabschnitt
- 2002: Innere Rundung
- 2004: Befestigungsaussparung
- 202: Kontaktverbindungsabschnitt
- 204: Elastisches Befestigungselement
- 206: Anschlagsabschnitt

- 22: Inneres Gehäuse
- 220: Einführabschnitt des inneren Gehäuses
- 2202: Befestigungsringabschnitt
- 2204: Treppenstufenabschnitt
- 222: Befestigungsabschnitt des inneren Gehäuses
- 2220: Begrenzungsfläche des inneren Gehäuses

- 24: Äußeres Gehäuse
- 2402: Vertiefung
- 2406: Abschirmelement-Aufnahmeabschnitt
- 2408: Dichtungselement-Aufnahmeabschnitt
- 242: Verriegelungsvorrichtung
- 246: Abschirmelement
- 248: Dichtungselement
- 250: Abschirmring

- 28: Befestigungselement

- 4: Kabel
- 6: Kabel

## Patentansprüche

1. Steckverbinder (1) zum elektrisch leitenden Verbinden eines daran anschließbaren elektrischen Kabels (4) mit einem Gegenstecker (2), umfassend:
- mindestens einen elektrisch leitfähigen Kontakt (10);
- ein isolierendes inneres Gehäuse (12), welches einen Befestigungsabschnitt (122) zum Befestigen des Kontakts (10) aufweist;
- ein leitfähiges äußeres Gehäuse (14), welches einen Befestigungsabschnitt zum Befestigen des inneren Gehäuses (12) aufweist;
wobei
der Steckverbinder (1) weiterhin ein mit dem leitfähigen äußeren Gehäuse (14) elektrisch verbundenes erstes Abschirmelement (146) umfasst, das eine isolierende äußere Schicht eines durch den Steckverbinder zu verbindenden Kabels (4) durchdringen kann und einen elektrischen Kontakt mit der elektromagnetischen Abschirmschicht in der isolierenden äußeren Schicht des Kabels (4) herstellen kann, um eine weitere elektromagnetische Abschirmfunktion für das Kabel (4) bereitzustellen;
**dadurch gekennzeichnet, dass**
das erste Abschirmelement (146) als ringförmige Feder in Form eines umgekehrten Dreiecks ausgebildet ist, dessen eine Seite in leitfähigem Kontakt mit dem leitfähigen äußeren Gehäuse (14) steht, während die untere Spitze in elektrischem Kontakt mit der elektromagnetischen Abschirmschicht des Kabels (4) bringbar ist
und
wobei der Steckverbinder (1) ein in dem leitfähigen äußeren Gehäuse (14) aufgenommenes zweites Abschirmelement (250) umfasst, das in elektrischem Kontakt mit dem leitfähigen äußeren Gehäuse (14) des Steckverbinders (1) und dem leitfähigen äußeren Gehäuse eines mit dem Steckverbinder (1) verbundenen Gegensteckers (2) stehen kann, um eine weitere elektromagnetische Abschirmfunktion für das Kabel (4) bereitzustellen.

2. Steckverbinder (1) nach Anspruch 1, **dadurch gekennzeichnet, dass** das erste Abschirmelement (146) aus Metall, insbesondere aus Kupfer, Stahl, Aluminium oder Messing, hergestellt ist oder zumindest eines dieser Materialien aufweist.

3. Steckverbinder (1) nach Anspruch 1, **dadurch gekennzeichnet, dass** es sich bei dem Metall um eine Aluminiumlegierung handelt, deren Oberfläche stromlos vernickelt ist.

4. Steckverbinder (1) nach Anspruch 1, **dadurch gekennzeichnet, dass** das zweite Abschirmelement ein ringförmiger Federring (250) ist, der in peripherem Kontakt mit dem leitfähigen äußeren Gehäuse (14) des Steckverbinders (1) und dem leitfähigen äußeren Gehäuse (24) des Gegensteckers (2) steht.

5. Steckverbinder (1) nach Anspruch 1, **dadurch gekennzeichnet, dass** es sich bei dem zweiten Abschirmelement (250) um eine Rundfeder, eine Dreiecksfeder, eine Multilamelle handelt und/oder dass das zweite Abschirmelement Bürstenkontakte aufweist.

6. Steckverbinder (1) nach einem der Ansprüche 1 bis 5, **dadurch gekennzeichnet, dass** das zweite Abschirmelement (250) aus einem rostfreien Metall, insbesondere aus Kupfer, Stahl, Aluminium oder Messing, hergestellt ist.

7. Steckverbinder (1) nach einem der Ansprüche 1 bis 6, **dadurch gekennzeichnet, dass** der Steckverbinder (1) ein in dem leitfähigen äußeren Gehäuse (14) aufgenommenes isolierendes Dichtungselement (148) umfasst, das in Eingriff mit der äußeren Isolierschicht des Kabels (4) bringbar ist, um eine wasserdichte Dichtung bereitzustellen.

8. Steckverbinder (1) nach einem der vorangehenden Ansprüche, **dadurch gekennzeichnet, dass** der Steckverbinder (1) ein L-förmiges Kompressionselement (17) umfasst, um durch eine Verbindung zwischen dem Befestigungselement (18) des Steckverbinders (1) und dem leitfähigen äußeren Gehäuse (14) die Schubkraft gleichzeitig ans Dichtungselement zu übertragen, so dass das Dichtungselement (148) eine radiale Expansion erzeugt und somit eine fest abdichtende Passung mit dem Kabel (4) bilden kann.

9. Steckverbinder (1) nach einem der vorangehenden Ansprüche, **dadurch gekennzeichnet, dass** das leitfähige äußere Gehäuse (14) aus Metall hergestellt ist.

10. Steckverbinder (1) nach Anspruch 9, **dadurch gekennzeichnet, dass** es sich bei dem Metall um ein stromlos vernickeltes Aluminiumelement handelt.

11. Steckverbinderanordnung, umfassend einen Steckverbinder (1) nach einem der Ansprüche 1 bis 10 und einen mit dem Steckverbinder (1) gekoppelten Gegenstecker (2), wobei der Gegenstecker (2) umfasst:
- einen leitfähigen Kontakt (20);
- ein isolierendes inneres Gehäuse (22), welches einen Befestigungsabschnitt (222) zum Befestigen des Kontaktes (20) aufweist;
- ein leitfähiges äußeres Gehäuse (24), welches einen Befestigungsabschnitt zum Befestigen des inneren Gehäuses (22) aufweist;
**dadurch gekennzeichnet, dass**
der Gegenstecker (2) weiterhin ein mit dem leitfähigen äußeren Gehäuse (24) leitend verbundenes drittes Abschirmelement (246) umfasst, das eine isolierende äußere Schicht eines mit dem Gegenstecker (2) verbindbaren Kabels (6) durchdringen kann und einen elektrischen Kontakt mit der elektromagnetischen Abschirmschicht in der isolierenden äußeren Schicht des Kabels (6) herstellen kann, um eine weitere elektromagnetische Abschirmfunktion für das Kabel (6) bereitzustellen und wobei das erste Abschirmelement (146), das zweite Abschirmelement (250) und das dritte Abschirmelement (246) jeweils einen elektrischen Kontakt mit dem äußeren Gehäuse (14) des Steckverbinders (1) und dem äußeren Gehäuse (24) des Gegensteckers (2) bilden, um einem durch den Steckverbinder (1) verbindbaren Kabel (4) und einem mit dem Gegenstecker (2) verbindbaren Kabel (6) und der Steckverbinderanordnung eine vollständige elektromagnetische Abschirmung bereitzustellen.

12. Steckverbinderanordnung nach Anspruch 11, **dadurch gekennzeichnet, dass** das dritte Abschirmelement (246) in Form eines umgekehrten Dreiecks ausgebildet ist, dessen obere Seite in leitfähigem Kontakt mit dem leitfähigen äußeren Gehäuse (24) des Gegensteckers (2) steht, während die untere Spitze in elektrischem Kontakt mit der elektromagnetischen Abschirmschicht des Kabels (4) bringbar ist.

13. Steckverbinderanordnung nach Anspruch 12, **dadurch gekennzeichnet, dass** das dritte Abschirmelement (246) aus Metall hergestellt ist.

14. Steckverbinderanordnung nach Anspruch 13, **dadurch gekennzeichnet, dass** das dritte Abschirmelement (246) aus rostfreiem Metall hergestellt ist.

## Claims

1. Plug connector (1) for electrically connecting an electrical cable (4) to a mating connector (2), comprising:
- at least one electrically conductive contact (10);
- an insulating inner housing (12) which has a mounting section (122) for securing the contact (10);
- a conductive outer housing (14) which has a mounting section for securing the inner housing (12);
wherein
the plug connector (1) further comprises a first shielding element (146) electrically connected to the conductive outer housing (14), which can penetrate an insulating outer layer of a cable (4) to be connected by the connector and can establish electrical contact with the electromagnetic shielding layer in the insulating outer layer of the cable (4) to provide a further electromagnetic shielding function for the cable (4)
**characterized in that**
the first shielding element (146) is designed as an annular spring in the form of an inverted triangle, one side of which is in conductive contact with the conductive outer housing (14), while the lower tip can be brought into electrical contact with the electromagnetic shielding layer of the cable (4)
and
wherein the plug connector (1) comprises a second shielding element (250) received in the conductive outer housing (14), which is in electrical contact with the conductive outer housing (14) of the connector (1) and the conductive outer housing of a mating connector (2) connected to the plug connector (1) can be used to provide a further electromagnetic shielding function for the cable (4).

2. Plug connector (1) according to claim 1, **characterized in that** the first shielding element (146) is made of metal, in particular copper, steel, aluminum, or brass, or at least comprises one of these materials.

3. Plug connector (1) according to claim 1, **characterized in that** the metal is an aluminum alloy whose surface is nickel-plated without current.

4. Plug connector (1) according to claim 1, **characterized in that** the second shielding element is an annular spring ring (250) which is in peripheral contact with the conductive outer housing (14) of the plug connector (1) and the conductive outer housing (24) of the mating connector (2).

5. Plug connector (1) according to claim 1, **characterized in that** the second shielding element (250) is a round spring, a triangular spring, a multi-lamella and/or that the second shielding element has brush contacts.

6. Connector (1) according to one of claims 1 to 5, **characterized in that** the second shielding element (250) is made of a stainless metal, in particular copper, steel, aluminum, or brass.

7. Plug connector (1) according to one of claims 1 to 6, **characterized in that** the plug connector (1) comprises an insulating sealing element (148) received in the conductive outer housing (14), which can be brought into engagement with the outer insulating layer of the cable (4) to provide a watertight seal.

8. Plug connector (1) according to one of the preceding claims, **characterized in that** the plug connector (1) comprises an L-shaped compression element (17) to simultaneously transmit the thrust force to the sealing element through a connection between the fastening element (18) of the connector (1) and the conductive outer housing (14), so that the sealing element (148) generates a radial expansion and can thus form a tightly sealing fit with the cable (4).

9. Plug connector (1) according to one of the preceding claims, **characterized in that** the conductive outer housing (14) is made of metal.

10. Plug connector (1) according to claim 9, **characterized in that** the metal is a nonelectroplated nickel-plated aluminum element.

11. Plug connector assembly comprising a connector (1) according to one of claims 1 to 10 and a mating connector (2) coupled to the plug connector (1), wherein the mating connector (2) comprises:
- a conductive contact (20);
- an insulating inner housing (22) having a mounting portion (222) for securing the contact (20);
- a conductive outer housing (24) having a mounting portion for securing the inner housing (22);
**characterized in that**
the mating connector (2) further comprises a third shielding element (246) conductively connected to the conductive outer housing (24), which can penetrate an insulating outer layer of a cable (6) connectable to the mating connector (2) and can establish an electrical contact with the electromagnetic shielding layer in the insulating outer layer of the cable (6) in order to provide a further electromagnetic shielding function for the cable (6), and wherein the first shielding element (146), the second shielding element (250) and the third shielding element (246) each form an electrical contact with the outer housing (14) of the connector (1) and the outer housing (24) of the mating connector (2) in order to provide complete electromagnetic shielding to a cable (4) connectable through the plug connector (1) and to a cable (6) connectable to the mating connector (2) and to the plug connector assembly.

12. Plug connector assembly according to claim 11, **characterized in that** the third shielding element (246) is designed in the form of an inverted triangle, the upper side of which is in conductive contact with the conductive outer housing (24) of the mating connector (2), while the lower tip can be brought into electrical contact with the electromagnetic shielding layer of the cable (4).

13. Plug connector assembly according to claim 12, **characterized in that** the third shielding element (246) is made of metal.

14. Plug connector assembly according to claim 13, **characterized in that** the third shielding element (246) is made of stainless metal.

## Revendications

1. Connecteur enfichable (1) pour le raccordement électriquement conducteur d'un câble électrique (4) pouvant être connecté à celui-ci à un contre-connecteur (2), comprenant :
- au moins un contact (10) électriquement conducteur ;
- un boîtier intérieur isolant (12) qui présente une section de fixation (122) pour fixer le contact (10) ;
- un boîtier extérieur (14) conducteur, qui présente une section de fixation pour fixer le boîtier intérieur (12) ;
dans lequel le connecteur enfichable (1) comprend par ailleurs un premier élément de blindage (146) relié électriquement au boîtier extérieur conducteur (14), qui peut traverser une couche extérieure isolante d'un câble (4) à raccorder par le connecteur enfichable et peut établir un contact électrique avec la couche de blindage électromagnétique dans la couche extérieure isolante du câble (4) pour fournir une fonction de blindage électromagnétique supplémentaire pour le câble (4) ;
**caractérisé en ce que**
le premier élément de blindage (146) est réalisé sous la forme d'un ressort annulaire en forme de triangle inversé dont un côté est en contact conducteur avec le boîtier extérieur conducteur (14), tandis que la pointe inférieure peut être amenée en contact électrique avec la couche de blindage électromagnétique du câble (4) et
dans lequel le connecteur enfichable (1) comprend un deuxième élément de blindage (250) logé dans le boîtier extérieur conducteur (14) qui peut être en contact électrique avec le boîtier extérieur conducteur (14) du connecteur enfichable (1) et le boîtier extérieur conducteur d'un contre-connecteur (2) raccordé au connecteur enfichable (1) pour fournir une fonction de blindage électromagnétique supplémentaire pour le câble (4).

2. Connecteur enfichable (1) selon la revendication 1, **caractérisé en ce que** le premier élément de blindage (146) est fabriqué en métal, en particulier en cuivre, acier, aluminium ou laiton, ou présente au moins un de ces matériaux.

3. Connecteur enfichable (1) selon la revendication 1, **caractérisé en ce que** le métal est un alliage d'aluminium dont la surface est nickelée sans courant.

4. Connecteur enfichable (1) selon la revendication 1, **caractérisé en ce que** le deuxième élément de blindage est un anneau à ressort (250) annulaire qui est en contact périphérique avec le boîtier extérieur conducteur (14) du connecteur enfichable (1) et le boîtier extérieur conducteur (24) du contre-connecteur (2).

5. Connecteur enfichable (1) selon la revendication 1, **caractérisé en ce que** le deuxième élément de blindage (250) est un ressort rond, un ressort triangulaire, une lamelle multiple et/ou **en ce que** le deuxième élément de blindage présente des contacts à balais.

6. Connecteur enfichable (1) selon l'une quelconque des revendications 1 à 5, **caractérisé en ce que** le deuxième élément de blindage (250) est fabriqué en un métal inoxydable, en particulier en cuivre, acier, aluminium ou laiton.

7. Connecteur enfichable (1) selon l'une quelconque des revendications 1 à 6, **caractérisé en ce que** le connecteur enfichable (1) comprend un élément d'étanchéité isolant (148), logé dans le boîtier extérieur conducteur (14), qui peut être amené en prise avec la couche d'isolation extérieure du câble (4) pour fournir une étanchéité à l'eau.

8. Connecteur enfichable (1) selon l'une quelconque des revendications précédentes, **caractérisé en ce que** le connecteur enfichable (1) comprend un élément de compression en forme de L (17) pour transmettre simultanément la force de poussée à l'élément d'étanchéité par un raccordement entre l'élément de fixation (18) du connecteur enfichable (1) et le boîtier extérieur conducteur (14), de telle sorte que l'élément d'étanchéité (148) génère une expansion radiale et peut ainsi former un ajustement étanche solide avec le câble (4).

9. Connecteur enfichable (1) selon l'une quelconque des revendications précédentes, **caractérisé en ce que** le boîtier extérieur conducteur (14) est fabriqué en métal.

10. Connecteur enfichable (1) selon la revendication 9, **caractérisé en ce que** le métal est un élément en aluminium nickelé sans courant.

11. Ensemble de connecteurs enfichables comprenant un connecteur enfichable (1) selon l'une quelconque des revendications 1 à 10 et un contre-connecteur (2) couplé au connecteur enfichable (1), dans lequel le contre-connecteur (2) comprend :
- un contact (20) conducteur ;
- un boîtier intérieur isolant (22) qui présente une section de fixation (222) pour fixer le contact (20) ;
- un boîtier extérieur conducteur (24), qui présente une section de fixation pour fixer le boîtier intérieur (22) ;
**caractérisé en ce que**
le contre-connecteur (2) comprend par ailleurs un troisième élément de blindage (246) raccordé de manière conductrice au boîtier extérieur conducteur (24), qui peut traverser une couche extérieure isolante d'un câble (6) pouvant être raccordé au contre-connecteur (2) et peut établir un contact électrique avec la couche de blindage électromagnétique dans la couche extérieure isolante du câble (6) pour fournir une fonction de blindage électromagnétique supplémentaire pour le câble (6) et dans lequel le premier élément de blindage (146), le deuxième élément de blindage (250) et le troisième élément de blindage (246) forment chacun un contact électrique avec le boîtier extérieur (14) du connecteur enfichable (1) et le boîtier extérieur (24) du contre-connecteur (2) pour fournir un blindage électromagnétique complet à un câble (4) pouvant être raccordé par le connecteur enfichable (1) et à un câble (6) pouvant être raccordé au contre-connecteur (2) et à l'ensemble de connecteurs enfichables.

12. Ensemble de connecteurs enfichables selon la revendication 11, **caractérisé en ce que** le troisième élément de blindage (246) est réalisé sous forme d'un triangle inversé dont la face supérieure est en contact conducteur avec le boîtier extérieur conducteur (24) du contre-connecteur (2), tandis que la pointe inférieure peut être amenée en contact électrique avec la couche de blindage électromagnétique du câble (4).

13. Ensemble de connecteurs enfichables selon la revendication 12, **caractérisé en ce que** le troisième élément de blindage (246) est fabriqué en métal.

14. Ensemble de connecteurs enfichables selon la revendication 13, **caractérisé en ce que** le troisième élément de blindage (246) est fabriqué en métal inoxydable.
